# EUROPEAN PATENT APPLICATION

(11) **EP 4 722 900 A1**
(43) Date of publication of application: **08.04.2026**
(21) Application number: 24884718.8
(22) Date of filing: 29.10.2024
(51) Int. Cl.: G06F 8/71

(54) **UPGRADING METHOD AND RELATED APPARATUS**

(30) Priority: 30.10.2023 CN 202311437157
(71) Applicant: Huawei Technologies Co., Ltd., Shenzhen, Guangdong 518129 (CN)
(72) Inventor: RONG, Yinhua, Shenzhen, Guangdong 518129 (CN); ZHANG, Heng, Shenzhen, Guangdong 518129 (CN)
(74) Representative: Goddar, Heinz J.
(86) International application number: PCT/CN2024/128050
(87) International publication number: WO 2025/092715

(57) **Abstract**

An upgrade method and a related apparatus are provided, which are applied to the field of connected vehicle technologies. The method is applied to a vehicle. The vehicle includes a first component. When the first component is faulty, the first component is upgraded based on first policy information. The first policy information indicates to ignore results of N upgrade condition checks, or the first policy information indicates to ignore performance of the N upgrade condition checks. When the first component is not faulty, M upgrade condition checks are performed based on second policy information, and the first component is upgraded when the M upgrade condition checks succeed. N and M are integers greater than 0. In this application, when a core component (namely, the first component) of the vehicle encounters an exception, a vehicle end actively identifies exception status information, and generates the first policy information to rescue the core component. Such an automatic rescue manner without manual intervention can reduce operational costs, and help improve rescue efficiency and user experience.

## Description

This application claims priority to Chinese Patent Application No. 202311437157.6, filed with the China National Intellectual Property Administration on October 30, 2023 and entitled "UPGRADE METHOD AND RELATED APPARATUS", which is incorporated herein by reference in its entirety.

### TECHNICAL FIELD

This application relates to the field of connected vehicle technologies, and in particular, to an upgrade method and a related apparatus.

### BACKGROUND

As the internet-of-vehicles technology becomes increasingly mature, internet-of-vehicles services are gradually improved. As a remote upgrade mode, an over-the-air (over-the-air, OTA) technology is also developing toward in-vehicle terminals. In existing OTA upgrade solutions, if a core component of a vehicle fails to be upgraded, the core component is "bricked". In this case, operational personnel need to participate in rescue. For example, vehicle towing and near-end flashing are required to restore a vehicle status. Such a rescue manner is inefficient and leads to poor user experience.

### SUMMARY

Embodiments of this application provide an upgrade method and a related apparatus, to improve vehicle rescue efficiency and help improve user experience.

According to a first aspect, an embodiment of this application provides an upgrade method, which is performed by a terminal. The terminal may be a terminal itself, or may be a unit, a circuit, or a module (for example, a chip) that has a corresponding function in the terminal. This is not limited in this application. For example, this application is described by using an example in which the terminal is a vehicle. The vehicle includes a first component. The method includes:
upgrading the first component based on first policy information when the first component is faulty, where the first policy information indicates to ignore results of N upgrade condition checks, or the first policy information indicates to ignore performance of the N upgrade condition checks, and N is an integer greater than 0; or
performing M upgrade condition checks based on second policy information when the first component is not faulty, where M is an integer greater than 0; and upgrading the first component when the M upgrade condition checks succeed. That a first upgrade condition check succeeds includes that a result of the first upgrade condition check is successful, and the first upgrade condition check is any one of the M upgrade condition checks.

In embodiments of this application, when a core component (namely, the first component) of the vehicle encounters an exception, the vehicle actively identifies exception status information, and generates the first policy information to rescue/upgrade the core component. Such an automatic rescue manner without manual intervention can reduce operational costs, and help improve rescue efficiency and user experience. It should be understood that rescuing the core component based on the first policy information can simplify pre-upgrade condition determining and a related processing procedure, to complete flashing of the core component.

In a possible implementation, the first policy information is associated with the second policy information, the second policy information is from a server, and the first policy information is determined by the vehicle or preconfigured in the vehicle.

In this implementation, the first policy information may be policy information automatically generated by the vehicle when the core component is faulty or may be policy information that is read and preconfigured in the vehicle. The first policy information has an implication of indicating an emergency rescue task. Therefore, the vehicle completes rescue for the core component based on the first policy information determined by the vehicle. Such a manner of automatic diagnosis and identification as well as automatic rescue and repair helps to improve rescue efficiency and enhance user experience. The second policy information is policy information sent by the server to the vehicle when the core component is not faulty. The second policy information has an implication of indicating a normal OTA upgrade task. Therefore, the vehicle may complete the OTA upgrade task based on the received second policy information sent by the server.

In a possible implementation, the method further includes:
obtaining exception status information of the first component; and
determining a first exception level based on the exception status information, where the first exception level belongs to one of a plurality of exception levels, and the plurality of exception levels are used to describe fault severities.

Upgrading the first component based on the first policy information when the first component is faulty includes:
upgrading the first component based on the first policy information when the first exception level meets a preset condition.

In this implementation, the exception status information of the vehicle (or referred to as components in the vehicle) may be obtained, and a corresponding exception level is determined based on the obtained exception status information, so that policy information is selected based on a relationship between the exception level and the preset condition to perform the upgrade task. An example in which the exception status information of the first component is obtained is used. When the exception status information of the first component is obtained, and it is determined, based on the exception status information of the first component, that the corresponding first exception level meets the preset condition, the first component may be upgraded based on the first policy information.

In a possible implementation, the plurality of exception levels are positively correlated with the fault severities.

That the first exception level meets the preset condition includes:
the first exception level is not lower than a level threshold.

In this implementation, the plurality of exception levels are positively correlated with the fault severities, that is, a higher exception level indicates a more serious fault. When the first exception level is higher than or equal to the level threshold, the first component is upgraded based on the first policy information, so that automatic rescue and repair can be performed on the core component of the vehicle when the core component of the vehicle encounters an exception.

In a possible implementation, the plurality of exception levels are negatively correlated with the fault severities.

That the first exception level meets the preset condition includes:
the first exception level is not higher than the level threshold.

In this implementation, the plurality of exception levels are negatively correlated with the fault severities, that is, a lower exception level indicates a more serious fault. When the first exception level is lower than or equal to the level threshold, the first component is upgraded based on the first policy information, so that automatic rescue and repair can be performed on the core component of the vehicle when the core component of the vehicle encounters an exception.

In a possible implementation, the first component is a power-related component of the vehicle. In other words, the core component of the vehicle is a power-related component of the vehicle. It should be understood that, when the power-related component of the vehicle encounters an exception, normal use of the vehicle is affected, and therefore emergency rescue needs to be performed.

In a possible implementation, the power-related component includes one or more of the following:
a battery management system (battery management system, BMS), a micro controller unit (micro controller unit, MCU), or a power distribution unit (power distribution unit, PDU).

Optionally, the power-related component may alternatively be a passive entry passive start (passive entry passive start, PEPS) system or the like. This is not limited in this application.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

In a possible implementation, upgrading the first component based on the first policy information includes:
upgrading the first component at a first moment based on the first policy information.

In a possible implementation, upgrading the first component at the first moment based on the first policy information includes:
upgrading the first component at the first moment based on the first policy information when a user is not in the vehicle.

In this implementation, when the user is not in the vehicle, the vehicle may upgrade the first component at a reserved time (for example, the first moment) based on the first policy information. This is more in line with an actual scenario and improves applicability of the solutions.

In a possible implementation, before upgrading the first component at the first moment based on the first policy information, the method further includes:
releasing a first vehicle control signal, where the first vehicle control signal is a signal associated when the M upgrade condition checks are performed; and
activating a second vehicle control signal, where the second vehicle control signal is a signal associated with the first policy information.

In this implementation, the vehicle releases the first vehicle control signal before the reserved time arrives, which helps to save energy of the vehicle. In addition, the second vehicle control signal is activated, so that the first component is directly upgraded based on the first policy information after the first moment arrives, thereby improving rescue efficiency.

In a possible implementation, the second vehicle control signal is included in the first vehicle control signal.

In a possible implementation, upgrading the first component based on the first policy information includes:
upgrading the first component based on the first policy information when a user is in the vehicle.

In this implementation, when the user is in the vehicle, the first component needs to be directly upgraded based on the first policy information. This helps implement vehicle rescue as soon as possible in a scenario in which the user needs to use the vehicle, thereby meeting a vehicle use demand of the user, and improving user experience.

In a possible implementation, before upgrading the first component based on the first policy information, the method further includes:
obtaining a first user instruction; and
upgrading the first component based on the first policy information and the first user instruction.

In this implementation, the user may input/select an operation instruction (for example, the first user instruction) on a user interface/visual interface. The first user instruction is used to trigger the step of upgrading the first component by the vehicle based on the first policy information. Such a manner of triggering an upgrade according to the user instruction improves user participation, thereby improving user satisfaction.

According to a second aspect, an embodiment of this application provides an upgrade method, which is performed by a server. The server may be a server itself, or may be a unit, a circuit, or a module (for example, a chip) that has a corresponding function in the server. This is not limited in this application. For example, this application is described by using the server as an execution body. The method includes:
generating second policy information; and
sending the second policy information to a vehicle.

The vehicle includes a first component, the second policy information is associated with M upgrade condition checks, the M upgrade condition checks are upgrade condition checks corresponding to a case in which the first component is not faulty, the second policy information is associated with first policy information, the first policy information is upgrade policy information corresponding to a case in which the first component is faulty, the first policy information indicates to ignore results of N upgrade condition checks, or the first policy information indicates to ignore performance of the N upgrade condition checks, M is an integer greater than 0, and N is an integer greater than 0.

In embodiments of this application, the second policy information is policy information sent by the server to the vehicle when a core component (for example, the first component) is not faulty. The second policy information has an implication of indicating a normal OTA upgrade task. Therefore, the vehicle may complete the OTA upgrade task based on the received second policy information sent by the server.

In a possible implementation, the first policy information is determined by the vehicle or preconfigured in the vehicle.

In a possible implementation, the first component is a power-related component of the vehicle.

In a possible implementation, the power-related component includes one or more of the following:
a BMS, an MCU, or a PDU.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

According to a third aspect, an embodiment of this application provides an upgrade apparatus. The upgrade apparatus may be a vehicle. The vehicle includes a first component. The apparatus includes:
a processing unit, configured to upgrade the first component based on first policy information when the first component is faulty. The first policy information indicates to ignore results of N upgrade condition checks, or the first policy information indicates to ignore performance of the N upgrade condition checks. N is an integer greater than 0.

The processing unit is configured to perform M upgrade condition checks based on second policy information when the first component is not faulty, where M is an integer greater than 0. The processing unit is configured to upgrade the first component when the M upgrade condition checks succeed. That a first upgrade condition check succeeds includes that a result of the first upgrade condition check is successful, and the first upgrade condition check is any one of the M upgrade condition checks.

In a possible implementation, the first policy information is associated with the second policy information, the second policy information is from a server, and the first policy information is determined by the vehicle or preconfigured in the vehicle.

In a possible implementation, the processing unit is further configured to:
obtain exception status information of the first component; and
determine a first exception level based on the exception status information, where the first exception level belongs to one of a plurality of exception levels, and the plurality of exception levels are used to describe fault severities.

When upgrading the first component based on the first policy information when the first component is faulty, the processing unit is configured to:
upgrade the first component based on the first policy information when the first exception level meets a preset condition.

In a possible implementation, the plurality of exception levels are positively correlated with the fault severities.

That the first exception level meets the preset condition includes:
the first exception level is not lower than a level threshold.

In a possible implementation, the plurality of exception levels are negatively correlated with the fault severities.

That the first exception level meets the preset condition includes:
the first exception level is not higher than the level threshold.

In a possible implementation, the first component is a power-related component of the vehicle.

In a possible implementation, the power-related component includes one or more of the following:
a BMS, an MCU, or a PDU.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

In a possible implementation, upgrading the first component based on the first policy information includes:
upgrading the first component at a first moment based on the first policy information.

In a possible implementation, upgrading the first component at the first moment based on the first policy information includes:
upgrading the first component at the first moment based on the first policy information when a user is not in the vehicle.

In a possible implementation, before upgrading the first component at the first moment based on the first policy information, the processing unit is further configured to:
release a first vehicle control signal, where the first vehicle control signal is a signal associated when the M upgrade condition checks are performed; and
activate a second vehicle control signal, where the second vehicle control signal is a signal associated with the first policy information.

In a possible implementation, the second vehicle control signal is included in the first vehicle control signal.

In a possible implementation, when upgrading the first component based on the first policy information, the processing unit is configured to:
upgrade the first component based on the first policy information when a user is in the vehicle.

In a possible implementation, before upgrading the first component based on the first policy information, the processing unit is configured to:
obtain a first user instruction; and
upgrade the first component based on the first policy information and the first user instruction.

For technical effects brought by the third aspect and any possible implementation, refer to descriptions of technical effects corresponding to the first aspect and corresponding implementations.

According to a fourth aspect, an embodiment of this application provides an upgrade apparatus. The upgrade apparatus may be a server. The apparatus includes:
a processing unit, configured to generate second policy information; and
a transceiver unit, configured to send the second policy information to a vehicle.

The vehicle includes a first component, the second policy information is associated with M upgrade condition checks, the M upgrade condition checks are upgrade condition checks corresponding to a case in which the first component is not faulty, the second policy information is associated with first policy information, the first policy information is upgrade policy information corresponding to a case in which the first component is faulty, the first policy information indicates to ignore results of N upgrade condition checks, or the first policy information indicates to ignore performance of the N upgrade condition checks, M is an integer greater than 0, and N is an integer greater than 0.

In a possible implementation, the first policy information is determined by the vehicle or preconfigured in the vehicle.

In a possible implementation, the first component is a power-related component of the vehicle.

In a possible implementation, the power-related component includes one or more of the following:
a BMS, an MCU, or a PDU.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

For technical effects brought by the fourth aspect and any possible implementation, refer to the descriptions of the technical effects corresponding to the second aspect and corresponding implementations.

Optionally, in the upgrade apparatus according to either of the third aspect and the fourth aspect and any possible implementation:
In a design, the upgrade apparatus is a communication device. When the upgrade apparatus is the communication device, the transceiver unit may be a transceiver or an input/output interface, and the processing unit may be at least one processor. Optionally, the transceiver may be a transceiver circuit. Optionally, the input/output interface may be an input/output circuit.

In another design, the upgrade apparatus is a chip (system) or a circuit used in a communication device. When the upgrade apparatus is the chip (system) or the circuit used in the communication device, the transceiver unit may be a communication interface (input/output interface), an interface circuit, an output circuit, an input circuit, a pin, a related circuit, or the like on the chip (system) or the circuit. The processing unit may be at least one processor, a processing circuit, a logic circuit, or the like.

According to a fifth aspect, an embodiment of this application provides an upgrade apparatus. The upgrade apparatus includes a processor. The processor is coupled to a memory, and may be configured to execute instructions in the memory, to implement the method according to either of the first aspect and the second aspect and any possible implementation. Optionally, the upgrade apparatus further includes the memory. Optionally, the upgrade apparatus further includes a communication interface, and the processor is coupled to the communication interface.

According to a sixth aspect, an embodiment of this application provides an upgrade apparatus, including a logic circuit and a communication interface. The communication interface is configured to receive information or send information. The logic circuit is configured to receive information or send information through the communication interface, so that the upgrade apparatus performs the method according to either of the first aspect and the second aspect and any possible implementation.

According to a seventh aspect, an embodiment of this application provides a computer-readable storage medium. The computer-readable storage medium is configured to store a computer program (which may also be referred to as code or instructions). When the computer program is run on a computer, the method according to either of the first aspect and the second aspect and any possible implementation is implemented.

According to an eighth aspect, an embodiment of this application provides a computer program product. The computer program product includes a computer program (which may also be referred to as code or instructions). When the computer program is run, a computer is enabled to perform the method according to either of the first aspect and the second aspect and any possible implementation.

According to a ninth aspect, an embodiment of this application provides a chip. The chip includes a processor. The processor is configured to execute instructions. When the processor executes the instructions, the chip is enabled to perform the method according to either of the first aspect and the second aspect and any possible implementation. Optionally, the chip further includes a communication interface, and the communication interface is configured to: receive a signal or send a signal.

According to a tenth aspect, an embodiment of this application provides a vehicle end. The vehicle end includes at least one upgrade apparatus according to the third aspect, or the upgrade apparatus according to the fourth aspect, or the upgrade apparatus according to the fifth aspect, or the upgrade apparatus according to the sixth aspect, or the chip according to the ninth aspect.

According to an eleventh aspect, an embodiment of this application provides a system. The system includes a vehicle and a server. The vehicle is configured to perform the method according to the first aspect and any possible implementation, and the server is configured to perform the method according to the second aspect and any possible implementation.

In addition, in a process of performing the method according to either of the first aspect and the second aspect and any possible implementation, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to either of the first aspect and the second aspect and any possible implementation, the processor may be a processor specially configured to perform the method, or may be a processor, for example, a general-purpose processor, that performs the method by executing computer instructions in a memory. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside an apparatus.

In another possible implementation, the at least one memory is located inside an apparatus.

In still another possible implementation, some memories in the at least one memory are located in an apparatus, and the other memories are located outside the apparatus.

In this application, the processor and the memory may alternatively be integrated into one device. In other words, the processor and the memory may alternatively be integrated together.

### BRIEF DESCRIPTION OF DRAWINGS

FIG. 1 is a diagram of an architecture of an OTA upgrade system according to this application;
FIG. 2 is a diagram of an architecture of another OTA upgrade system according to this application;
FIG. 3 is a functional block diagram of a vehicle 10 according to this application;
FIG. 4 is a diagram of a scenario in which a function of a core component is faulty according to this application;
FIG. 5 is a schematic flowchart of an upgrade method according to an embodiment of this application;
FIG. 6 is a diagram of a structure of an upgrade apparatus according to an embodiment of this application;
FIG. 7 is a diagram of a structure of an upgrade apparatus according to an embodiment of this application; and
FIG. 8 is a diagram of a structure of a chip according to an embodiment of this application.

### DESCRIPTION OF EMBODIMENTS

The following describes embodiments of this application with reference to the accompanying drawings in embodiments of this application. It should be noted that in this application, terms such as "example" or "for example" represent giving an example, an illustration, or a description. Any embodiment or design scheme described as an "example" or "for example" in this application should not be construed as being more preferred or having more advantages than another embodiment or design scheme. To be precise, use of the term such as "example" or "for example" is intended to present a related concept in a specific manner.

In embodiments of this application, "at least one" means one or more, and "a plurality of" means two or more. "At least one of the following" or a similar expression thereof means any combination of these items, including a singular item or any combination of plural items. For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance degrees of the plurality of objects. For example, a first message and a second message are merely used to distinguish between different message types, but do not indicate different structures, importance degrees, or the like of the two messages.

Some terms in this application are first described, to facilitate understanding by a person skilled in the art.
1. An OTA technology is a technology for downloading data through a wireless network, and has been widely applied to upgrading of devices such as a vehicle, a smart home device (a television, a gateway, a refrigerator, or the like), a mobile terminal (a mobile phone, a tablet computer, or the like), a set-top box, and the like. The OTA technology supports an automatic upgrade mainly by downloading an OTA upgrade package (and also supports an upgrade by copying an OTA upgrade package to an SD card). An OTA upgrade has a high speed and has little impact on data. Therefore, the OTA upgrade has become a main method for upgrading terminal functions. For example, for a vehicle, a vehicle manufacturer (original equipment manufacturer, OEM, or referred to as an original device manufacturer) upgrades related hardware or software of the vehicle by using the OTA technology, which helps the manufacturer reduce recall costs, quickly respond to a demand, and improve user experience.

An OTA server is a server (or referred to as an OEM server, also referred to as an OEM cloud or an OTA cloud) that is responsible for managing an OTA upgrade process. An OTA module (or referred to as an OTA upgrade control component) is configured in a terminal (for example, a device such as a vehicle, a television, a mobile phone, a tablet computer, or a set-top box). The OTA module may transmit information to the OTA server, to upgrade a component (which includes software and hardware, or may be a vehicle) on the terminal.
2. A telematics box (telematics box), also referred to as a vehicle box (Tbox or T-box), is a blended word of telecommunications (Telecommunications) and informatics (Informatics). The telematics box can be literally defined as a service system that provides information by using a computer system built in a vehicle, an aircraft, a ship, a train, or another transportation means, a wireless communication technology, a satellite navigation apparatus, and an internet technology for exchanging information such as text and voice. In brief, the service system connects a vehicle to the internet by using a wireless network, and provides a vehicle owner with various information necessary for driving and living.
3. An electronic control unit (electronic control unit, ECU) is a vehicle-specific microcomputer controller in terms of use. Same as a common computer, the electronic control unit includes a microprocessor (for example, a central processing unit (central processing unit, CPU)), a memory (a read only memory (read only memory, ROM), or a random access memory (random access memory, RAM)), an input/output interface (I/O), an analog-to-digital converter (A/D), and large-scale integrated circuits such as shaping and driving. A vehicle control unit in embodiments of this application is an electronic control unit.
4. A vehicle control unit (vehicle control unit, VCU), which may also be referred to as an integrated electric vehicle control unit VCU, is an assembly controller of a powertrain system of an electric vehicle, and is responsible for coordinating work of components such as an engine, a driving motor, a transmission, and a traction battery, and has a function of improving power performance, safety performance, economy, and the like of a vehicle. The VCU is a core component of an integrated electric vehicle control system and is a core controller configured to control start, operation, advance and retreat, speed, and stop of a motor of an electric vehicle and control another electronic device of the electric vehicle. As a core component of a control system of a pure electric vehicle, the VCU is responsible for tasks such as data exchange, safety management, driver intension interpretation, and power stream management. The VCU collects a signal of a motor control system, a signal of an accelerator pedal, a signal of a brake pedal, and a signal of another part, determines a driving intension of a driver after performing comprehensive analysis and makes a response, and monitors actions of controllers of lower-layer parts. The VCU plays a key role in functions such as normal vehicle driving, battery power braking and regeneration, network management, fault diagnosis and processing, and vehicle status monitoring.
5. A human machine interface (Human Machine Interface, HMI), referred to as a man-machine interface for short, and also referred to as a human-computer interface, a user interface, or an operator interface, is a medium for interaction and information exchange between a system and a user, and implements conversion between an internal form of information and a form acceptable to human beings.
6. A controller area network (Controller Area Network, CAN) bus is one of the most widely used field buses globally. High reliability and a strong error detection capability of the CAN bus receive much attention, and therefore the CAN bus is widely applied to a vehicle computer control system and an industry environment with a hash ambient temperature, strong electromagnetic radiation, and intense vibration. The CAN bus is a widely applied field bus and has a great application prospect in fields such as industrial measurement and control and industrial automation. A CAN is a bus-type serial communication network. The CAN bus has advantages of being reliable, real-time, and flexible in data communication. For design transparency and operational flexibility, in compliance with a standard model of the international organization for standardization (international organization for standardization, ISO)/open systems interconnection reference model (open systems interconnection reference model, OSI), a structure of the CAN bus is divided into two layers: a physical layer and a data link layer (including a logical link control LLC sublayer and a medium access control (medium access control, MAC) sublayer).

To better understand the upgrade method provided in embodiments of this application, the following first describes a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may be aware that with evolution of the system architecture and emergence of new service scenarios, the technical solutions provided in this application are also applicable to similar technical problems.

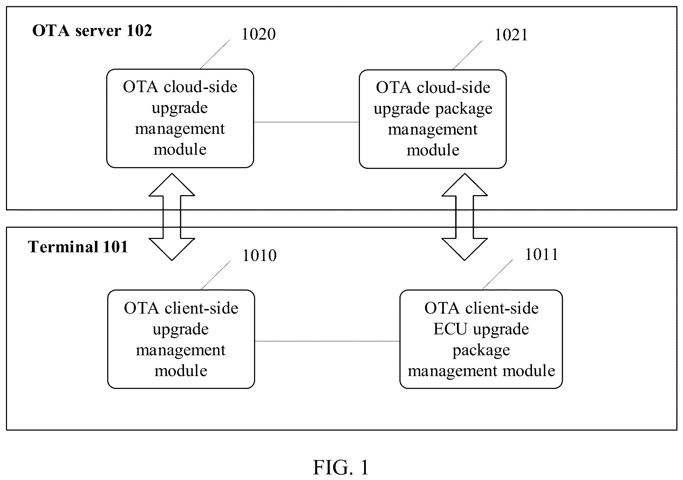

FIG. 1 is a diagram of an architecture of an OTA upgrade system according to this application. The OTA upgrade system may include a terminal 101 and an OTA server 102.

The OTA server 102 is a server that exchanges information with the terminal 101 in an OTA upgrade process. The OTA server 102 may include an OTA cloud-side upgrade management module 1020 and an OTA cloud-side upgrade package management module 1021. Generally, the OTA server may indicate the terminal to perform an upgrade on a specific control unit. Optionally, the OTA server may further send upgrade data of an ECU to the terminal by using the OTA cloud-side upgrade package management module 1021. In some specific implementation scenarios, the OTA server is also referred to as an OTA cloud, a cloud-side server, a server, or the like.

Optionally, the OTA cloud-side upgrade package management module 1021 and the OTA cloud-side upgrade management module 1020 may be two independent hardware modules. In other words, the OTA cloud-side upgrade package management module 1021 may be an independent server, and provides a service of downloading an installation package for the terminal 101.

The terminal 101 is a terminal on which a control unit is deployed, for example, a vehicle. The terminal 101 may obtain the upgrade data by using the OTA server 102, to upgrade the control unit.

The control unit in embodiments of this application may include all units in the terminal that are applicable to an OTA upgrade, for example, an ECU. The following embodiments are described by using the ECU as an example.

Optionally, the terminal 101 may include an OTA client-side upgrade management module 1010 and an OTA client-side ECU upgrade package management module 1011. Optionally, the terminal 101 may further include an OTA client-side ECU upgrade management unit 1012 (not shown in FIG. 1). The OTA client-side upgrade management module 1010 may interact with the OTA cloud-side upgrade management module 1020, obtain upgrade information from the OTA cloud-side upgrade management module 1020 based on software information that is of each ECU in the terminal 101 and that is collected by the OTA client-side ECU upgrade management unit 1012, and then trigger the OTA client-side ECU upgrade package management module 1011 to download the installation package. The OTA client-side ECU upgrade package management module 1011 may interact with the OTA cloud-side upgrade package management module 1021, to download and manage the installation package. The OTA client-side ECU upgrade management unit 1012 is responsible for specific ECU upgrade (rollback) processing.

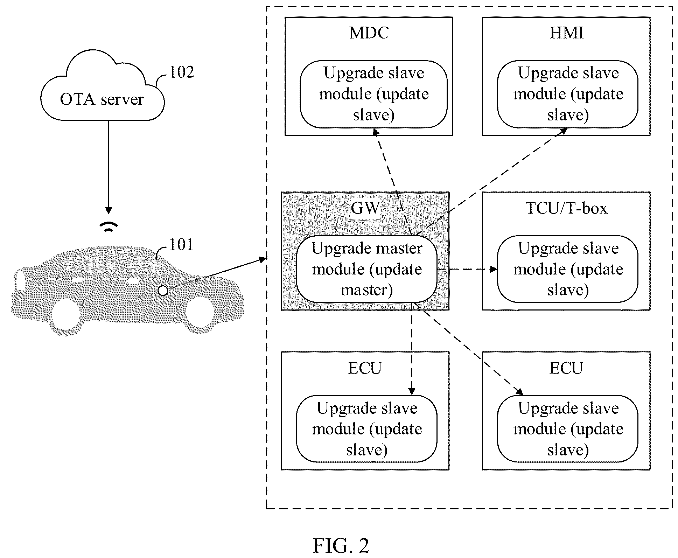

In some specific implementation scenarios, FIG. 2 is a diagram of an architecture of another OTA upgrade system according to this application. For example, the terminal 101 is a vehicle. The vehicle may be a vehicle based on a vehicle electrical/electronic (electrical/electronic, E/E) architecture. The vehicle may include at least one of the following components: a mobile data center (mobile data center, MDC), human-machine interaction (human-machine interaction, HMI), a client-side upgrade management unit gateway (gateway, GW), a telematics box (telematics box, T-box, or referred to as a TCU), an electronic control unit (electronic control unit, ECU), and the like. The GW is a core component in a vehicle electrical/electronic architecture. As a data exchange hub of a vehicle network, the GW may route network data of a controller area network (controller area network, CAN), a local interconnect network (local interconnect network, LIN), media oriented system transport (media oriented system transport, MOST), and FlexRay in different networks. The MDC is an intelligent on-board computing platform of the vehicle. The T-box is mainly used for communication with the outside of the vehicle, a background system, and a mobile phone application (application, APP). The HMI is an information input, entertainment, and interaction system of the vehicle. The ECU may be a vehicle-specific microcomputer controller.

For example, an upgrade master module (update master, which may be considered as an OTA master) is deployed in the GW of the terminal 101, and an upgrade slave module (update slave, which may be considered as an OTA slave) is deployed in a plurality of parts of the terminal 101. The upgrade master module in the GW may communicate with an upgrade slave module in another part, or may communicate with the OTA server 102. Alternatively, the OTA master module may be deployed in another component of the vehicle, or may be an independent module independent of other components. This is not limited in embodiments of this application.

For example, the OTA client-side upgrade management module 1010, the OTA client-side ECU upgrade package management module 1011, and the OTA client-side ECU upgrade management unit 1012 in the terminal 101 may be units in the MDC. The OTA client-side upgrade management module 1010 may specifically establish a connection to the OTA cloud-side upgrade management module 1020 by using the T-box. The OTA client-side ECU upgrade package management module 1011 may specifically establish a connection to the OTA cloud-side upgrade package management module 1021 by using the T-box.

There is usually only one OTA client-side upgrade management module 1010 in the terminal 101, and the OTA client-side upgrade management module 1010 may be deployed in a T-box or a gateway. The OTA client-side ECU upgrade package management module 1011 may be independently deployed in the terminal 101. Optionally, function-related ECUs in the terminal 101 may be integrated, and managed by jointly deploying the OTA client-side ECU upgrade package management module 1011 and the OTA client-side ECU upgrade management unit 1012. The OTA client-side ECU upgrade package management module 1011 and the OTA client-side ECU upgrade management unit 1012 are interconnected by using the GW.

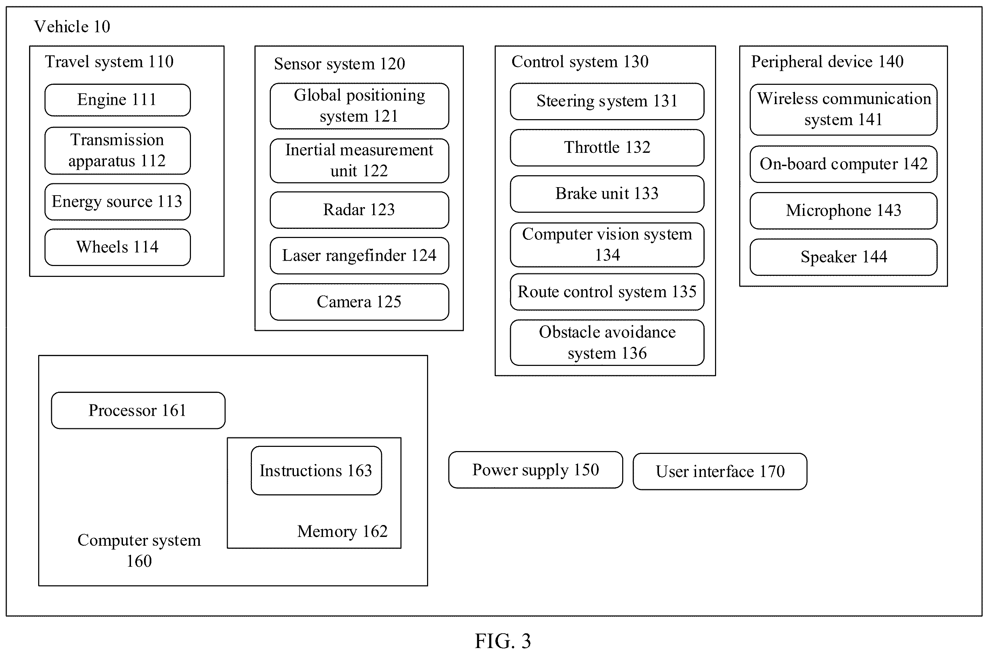

For ease of understanding, this application is mainly described by using an example in which the terminal is a vehicle. FIG. 3 is a functional block diagram of a vehicle 10 according to an embodiment of this application. The vehicle 10 may include various subsystems, such as a travel system 110, a sensor system 120, a control system 130, one or more peripheral devices 140, a power supply 150, a computer system 160, and a user interface 170. Optionally, the vehicle 10 may include more or fewer subsystems, and each subsystem may include a plurality of elements (or referred to as in-vehicle components or components). In addition, each subsystem and component of the vehicle 10 may be interconnected in a wired or wireless manner.

Optionally, elements in subsystems shown in FIG. 3 are merely examples. During actual application, the elements in the foregoing subsystems may be added or deleted according to an actual requirement. FIG. 3 should not be understood as a limitation on embodiments of this application.

It should be understood that the upgrade method in the solutions of this application may be applied to any in-vehicle component/element in the block diagram shown in FIG. 3, or may be applied to a component that is not included in the block diagram, or may be applied to some function domain control components that control the foregoing components, for example, an intelligent driving domain controller (multi domain controller, MDC) domain, a vehicle domain controller (vehicle domain controller, VDC) domain, and a cockpit domain controller (cockpit domain controller, CDC) domain. This is not limited in this application.

The vehicle 10 may be a car, a truck, a motorcycle, a bus, a ship, an airplane, a helicopter, a lawn mower, a recreational vehicle, a playground vehicle, a construction device, a trolley, a golf cart, a train, a handcart, or the like. This is not specially limited in embodiments of this application.

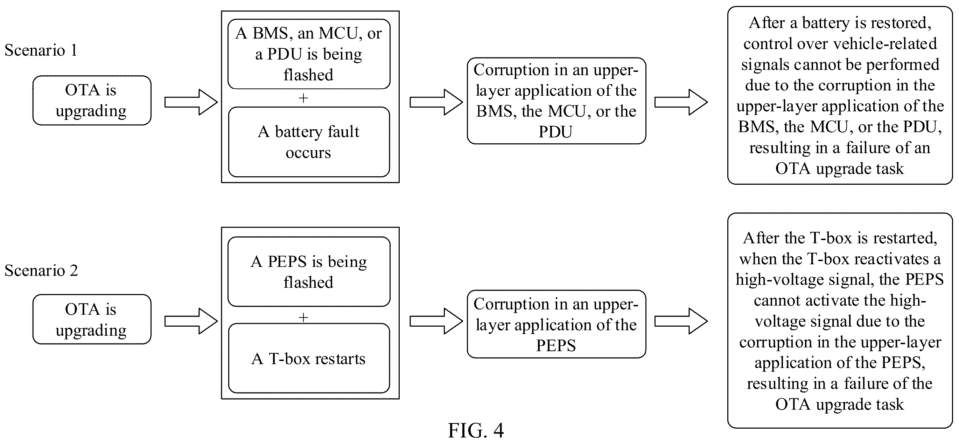

In existing OTA upgrade solutions, if a core component of a vehicle fails to be upgraded, the core component is "bricked". For example, FIG. 4 is a diagram of a scenario in which a function of a core component is faulty according to this application. Details are shown in FIG. 4.

Scenario 1: In a process of upgrading the core component (for example, in a process of flashing a battery management system (battery management system, BMS), a micro controller unit (micro controller unit, MCU), or a power distribution unit (power distribution unit, PDU)), a battery of the vehicle is faulty. In the scenario 1, an OTA upgrade task cannot proceed due to a battery fault. After the battery fault is recovered, even if the T-box restarts the OTA upgrade task, control over vehicle-related signals cannot be performed due to corruption in an upper-layer application of the BMS, the MCU, or the PDU, resulting in a failure to proceed the OTA upgrade task.

Scenario 2: In a process of upgrading the core component (for example, flashing a passive entry passive start (passive entry passive start, PEPS) system), the T-box is restarted. In the scenario 2, because the T-box is restarted, flashing of the core component is interrupted. After the T-box is restored/restarted, the T-box needs to reactivate a vehicle upgrade-related state (for example, the T-box reactivates a high-voltage signal). The PEPS cannot activate the high-voltage signal due to corruption in an upper-layer application of the PEPS, resulting in a failure to resume the OTA upgrade task.

Scenario 3 (not shown in FIG. 4): A software function of the core component is faulty (that is, not a hardware fault). In the scenario 3, the OTA upgrade task cannot be delivered because the software function of the core component is faulty, resulting in a failure to proceed the OTA upgrade task.

The foregoing scenarios are all scenarios in which a function of the core component is faulty during routine use or an OTA upgrade. In these scenarios, critical issues such as a vehicle power-on or wake-up failure may occur. As a result, a vehicle owner cannot use the vehicle and the OTA upgrade task cannot proceed normally. In this case, operational personnel need to participate in rescue. For example, vehicle towing and near-end flashing are required to restore a vehicle status. Such a rescue manner is inefficient and leads to poor user experience.

Based on this, this application provides an upgrade method, to improve vehicle rescue efficiency and help improve user experience.

The following describes in detail the upgrade method and a related apparatus provided in this application.

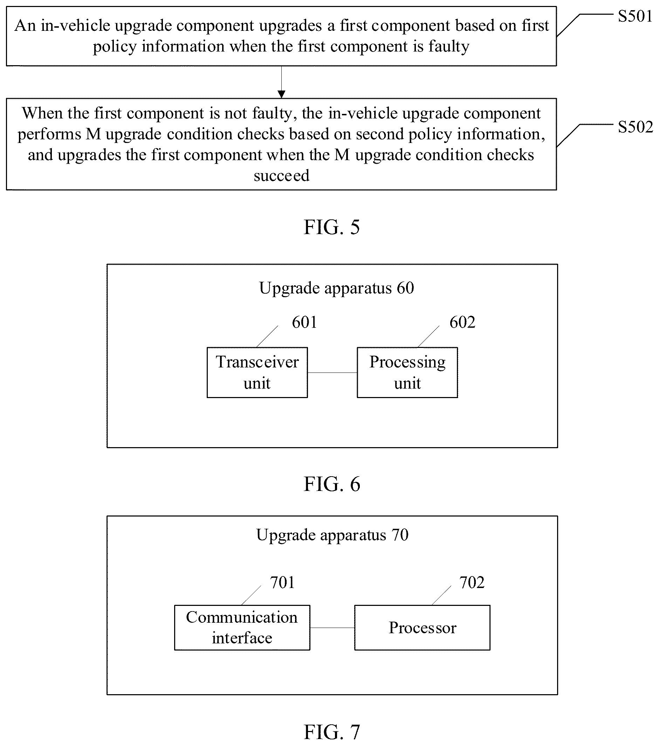

FIG. 5 is a schematic flowchart of an upgrade method according to an embodiment of this application. As shown in FIG. 5, the upgrade method includes the following steps S501 and S502. The method shown in FIG. 5 may be performed by a vehicle, or the method shown in FIG. 5 may be performed by a chip, an in-vehicle component, or the like that is deployed with upgrade main control software in the vehicle. For example, the upgrade main control software may be deployed in an in-vehicle component (or chip) such as a T-box, a CDC, a VDC, an MDC, or a gateway (gateway, GW) of the vehicle. This is not limited in this application. For ease of description, in FIG. 5, description is given by using an example in which an in-vehicle component deployed with the upgrade main control software in the vehicle is used as an execution body of the method. For brevity, the in-vehicle component is referred to as an in-vehicle upgrade component in the following. It should be noted that FIG. 5 is a schematic flowchart of a method embodiment of this application, and shows detailed communication steps or operations of the method. However, these steps or operations are merely examples. Variants of various operations in FIG. 5 or other operations may be further performed in embodiments of this application. In addition, the steps in FIG. 5 may be separately performed in a sequence different from that shown in FIG. 5, and not all operations in FIG. 5 may need to be performed. Specifically:
S501: The in-vehicle upgrade component upgrades a first component based on first policy information when the first component is faulty.

The first policy information indicates to ignore results of N upgrade condition checks, or the first policy information indicates to ignore performance of the N upgrade condition checks. Alternatively, the first policy information indicates to ignore results of N1 upgrade condition checks, and indicates to ignore performance of N2 upgrade condition checks. N1+N2=N, N1 and N2 are nonnegative integers, and N is an integer greater than 0.

It should be noted that "ignoring the results of the N/N1 upgrade condition checks" may be understood as that the N/N1 upgrade condition checks are performed but the check results are ignored (that is, even if the checks are performed, the check results are ignored, or whether the check results are passed is not concerned). In this way, an existing upgrade check procedure may be reused as much as possible in some scenarios, which has little impact on the existing upgrade check procedure and reduces development costs. "Ignoring the performance of the N/N2 upgrade condition checks" may be understood as not performing the N/N2 upgrade condition checks or skipping the N/N2 upgrade condition checks. In this way, upgrade efficiency can be improved in some scenarios. In other words, when the first component is faulty, installation/flashing of the first component may be directly performed.

For example, the N upgrade condition checks in this application include one or more of the following: checking activation of a high-voltage signal (also referred to as an upgrade high-voltage signal), checking activation of a vehicle ignition signal (for example, a KL15 signal), checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, notifying the vehicle to enter an upgrade mode, or the like.

Optionally, in some feasible implementations, in addition to indicating to ignore the results of the N upgrade condition checks or indicating to ignore the performance of the N upgrade condition checks, the first policy information may further indicate to perform K upgrade condition checks. Therefore, when the first component is faulty, the first component may be installed/flashed when the K upgrade condition checks are performed and the K upgrade condition checks succeed. K is an integer greater than or equal to 0. It should be understood that when K is equal to 0, it is equivalent to that the first policy information only indicates that the results of the N upgrade condition checks are ignored or that the performance of the N upgrade condition checks is ignored (or referred to as that the first policy information only indicates that the results of the N1 upgrade condition checks are ignored and that the performance of the N2 upgrade condition checks is ignored). Therefore, when the first component is faulty, installation/flashing of the first component may be directly performed. When K is an integer greater than 0, for example, the N upgrade condition checks may include: checking activation of a high-voltage signal, checking activation of a vehicle ignition signal (for example, a KL15 signal), checking a traction battery power percentage of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, notifying the vehicle to enter an upgrade mode, and the like. The K upgrade condition checks may include checking a speed of the vehicle, checking a gear of the vehicle, and the like.

It should be understood that the first policy information is upgrade policy information corresponding to a case in which the first component is faulty (or referred to as upgrade policy information corresponding to an emergency rescue task, or referred to as upgrade policy information in an emergency rescue mode). Alternatively, it is understood that the first policy information indicates an emergency rescue task. Herein, that the first policy information indicates the emergency rescue task may be specifically understood as that there is a binding/corresponding/association relationship between the emergency rescue task and the foregoing specific upgrade policy information. Therefore, if the first policy information directly indicates a task with a special flag (namely, the emergency rescue task), corresponding upgrade policy information may be determined based on the association relationship between the emergency rescue task and the upgrade policy information. In this embodiment of this application, the first component may be a power-related component of the vehicle (or referred to as a core component/key component of the vehicle). Generally, when the power-related component of the vehicle is faulty, normal use of the vehicle is affected. Therefore, emergency rescue needs to be performed. Correspondingly, a corresponding upgrade policy is the first policy information. For example, the power-related component of the vehicle may include a BMS, an MCU, a PDU, a PEPS, and the like. This is not limited in this application.

It may be understood that the first policy information in this embodiment of this application may be determined/generated by the vehicle (or referred to as the in-vehicle upgrade component in the vehicle), or the first policy information may be preconfigured in the vehicle. In other words, when it is determined that the first component is faulty, the in-vehicle upgrade component in the vehicle may automatically generate the first policy information. Alternatively, when it is determined that the first component is faulty, the in-vehicle upgrade component in the vehicle may read the first policy information preconfigured in the vehicle, so that the in-vehicle upgrade component in the vehicle may upgrade the first component based on the first policy information. Optionally, in some possible implementations, the first policy information may alternatively be from a server. In other words, when it is determined that the first component is faulty, the vehicle may report fault information to the server, and then the server may deliver the first policy information to the vehicle based on the received fault information, so that the in-vehicle upgrade component in the vehicle may upgrade the first component based on the received first policy information. It should be noted that in this application, the first policy information is primarily understood as being determined by the in-vehicle upgrade component in the vehicle or preconfigured in the vehicle.

During specific implementation, the in-vehicle upgrade component in the vehicle may obtain exception status information of the vehicle (or referred to as other components in the vehicle), and determine a corresponding exception level based on the obtained exception status information, so that policy information is selected based on a relationship between the exception level and a preset condition to perform the upgrade task. Herein, an example in which the exception status information of the first component is obtained is used. When the exception status information of the first component is obtained, and it is determined, based on the exception status information of the first component, that a corresponding first exception level meets the preset condition, the first component is upgraded based on the first policy information. It should be understood that the first exception level belongs to one of a plurality of exception levels, and the plurality of exception levels are used to describe fault severities.

In a possible implementation, the plurality of exception levels may be positively correlated with the fault severities. Therefore, the in-vehicle upgrade component may upgrade the first component based on the first policy information when the first exception level is not lower than a level threshold. In another possible implementation, the plurality of exception levels may be negatively correlated with the fault severities. Therefore, the in-vehicle upgrade component may upgrade the first component based on the first policy information when the first exception level is not higher than a level threshold. Herein, "not lower than" may be understood as being higher than or equal to, and "not higher than" may be understood as being lower than or equal to.

For ease of understanding, in this embodiment of this application, an example in which the plurality of exception levels are positively correlated with the fault severities is mainly used for understanding. In other words, a higher exception level indicates a higher fault severity. For example, as shown in Table 1, Table 1 shows a classification manner of exception levels. When the exception status information of the vehicle is "1. A precondition check fails, and a formal flashing procedure is not started" or "2. The upgrade succeeds, but OTA fails to exit", a corresponding exception level is Level 1. When the exception status information of the vehicle is "The upgrade fails, but vehicle rollback succeeds", a corresponding exception level is Level 2. When the exception status information of the vehicle is "The upgrade fails, and rollback fails, but all components can be started normally", a corresponding exception level is Level 3. When the exception status information of the vehicle is "1. A non-power-related component is damaged and cannot be started (that is, the non-power-related component is damaged/bricked during an OTA upgrade)" or "2. A software function of a non-power-related component is faulty and cannot be used", a corresponding exception level is Level 4. When the exception status information of the vehicle is "1. A power-related component is damaged and cannot be started (that is, the power-related component is damaged/bricked during an OTA upgrade)" or "2. A software function of a power-related component gives an alarm, affecting driving and use", a corresponding exception level is Level 5. When the exception status information of the vehicle is "The upgrade is suspended and cannot exit, resulting in feeding, and the upgrade is not completed", a corresponding exception level is Level 6. For example, the level threshold is Level 5. When an error of Level 5 or above occurs, the in-vehicle upgrade component may upgrade the first component based on the first policy information.

**Table 1**

| **Exception level** | **Description of exception status information** |
|---|---|
| Level 1 | 1. A precondition check fails, and a formal flashing procedure is not started |
| | 2. The upgrade succeeds, but OTA fails to exit |
| Level 2 | The upgrade fails, but vehicle rollback succeeds |
| Level 3 | The upgrade fails, and rollback fails, but all components can be started normally |
| Level 4 | 1. A non-power-related component is damaged and cannot be started |
| | 2. A software function of a non-power-related component is faulty and cannot be used |
| Level 5 | 1. A power-related component is damaged and cannot be started |
| | 2. A software function of a power-related component gives an alarm, affecting driving and use |
| Level 6 | The upgrade is suspended and cannot exit, resulting in feeding, and the upgrade is not completed |

Optionally, before upgrading the first component based on the first policy information, the in-vehicle upgrade component may alternatively first determine whether a user exists in the current vehicle. When the user is in the vehicle, the in-vehicle upgrade component may immediately upgrade the first component based on the first policy information (that is, immediately execute a rescue task). In this way, vehicle rescue can be completed as soon as possible, allowing the user to use the vehicle and improving user experience. The in-vehicle upgrade component upgrades the first component at a first moment based on the first policy information when the user is not in the vehicle. Herein, the first moment is a rescue time reserved by the in-vehicle upgrade component for the vehicle. In other words, the in-vehicle upgrade component sends the rescue time to the vehicle. After the reserved rescue time arrives, the vehicle automatically wakes up. Therefore, the in-vehicle upgrade component may upgrade the first component based on the first policy information. It should be understood that, when the user is not in the vehicle and before the first moment arrives, a first vehicle control signal is released, which helps to save energy of the vehicle. Herein, the first vehicle control signal is a signal associated when M upgrade condition checks are performed (or described as that the first vehicle control signal is a signal that needs to be activated when a normal OTA upgrade is performed/a non-emergency rescue task is performed). In addition, when the user is not in the vehicle and before the first moment arrives, a second vehicle control signal may be further activated, so that the first component is directly upgraded based on the first policy information after the first moment arrives, thereby improving rescue efficiency. Herein, the second vehicle control signal is a signal associated with the first policy information (or described as that the second vehicle control signal is a signal that needs to be activated when an emergency rescue task is performed, or a signal that needs to be activated in an emergency rescue mode).

Generally, the second vehicle control signal is included in the first vehicle control signal. For example, the first vehicle control signal may be one or more of the following signals: a vehicle sleep inhibit signal, a remote mode signal, a vehicle ignition signal (for example, a KL15 signal), an upgrade high-voltage signal, a mutex signal, a flash gear signal, a CAN network keep-alive signal, and the like. For example, the second vehicle control signal may be one or more of the following signals: a vehicle sleep inhibit signal, a remote mode signal, a KL15 signal (in an emergency rescue mode, the signal is not activated, or even if the signal is activated, a result of activating the signal is ignored (that is, whether the signal is activated successfully is not concerned)), an upgrade high-voltage signal (in an emergency rescue mode, the signal is not activated, or even if the signal is activated, a result of activating the signal is ignored (that is, whether the signal is activated successfully is not concerned)), a mutex signal, a flash gear signal, a CAN network keep-alive signal, and the like.

Optionally, before upgrading the first component based on the first policy information, the in-vehicle upgrade component of the vehicle may further obtain a first user instruction input by the user. The first user instruction is used to trigger the in-vehicle upgrade component to upgrade the first component based on the first policy information. Herein, the first user instruction input by the user may be an operation instruction input/selected by the user on a user interface/visual interface.

It should be understood that, when upgrading the first component based on the first policy information, the in-vehicle upgrade component may ignore the results of the N upgrade condition checks, or directly install/flash the first component without performing the N upgrade condition checks. In other words, this application simplifies a prerequisite determining procedure and a related processing procedure, to complete flashing of the core component.

Optionally, after the first component is successfully upgraded, a vehicle status may be reset. To be specific, the vehicle may be restored to a normal available state, and supports a normal OTA upgrade and subsequent vehicle use by a vehicle owner.

S502: When the first component is not faulty, the in-vehicle upgrade component performs the M upgrade condition checks based on second policy information, and upgrades the first component when the M upgrade condition checks succeed.

It should be understood that the second policy information is upgrade policy information corresponding to a normal OTA upgrade (or referred to as upgrade policy information corresponding to a non-emergency rescue task, or referred to as upgrade policy information in a normal mode). Alternatively, it is understood that the second policy information indicates a non-emergency rescue task or a normal OTA upgrade task, or the second policy information indicates to perform the M upgrade condition checks. The first policy information is associated with the second policy information. Herein, that the first policy information is associated with the second policy information may be understood as that the first policy information is included in the second policy information (or referred to as that the first policy information is a subset of the second policy information). Alternatively, that the first policy information is associated with the second policy information may be understood as that an upgrade condition check indicated by the first policy information is generated/determined based on an upgrade condition check indicated by the second policy information. Generally, the second policy information is from the server. In other words, in a normal OTA upgrade procedure, the server generates the second policy information, and sends the second policy information to the vehicle. The second policy information may be associated with the M upgrade condition checks. Herein, the M upgrade condition checks are upgrade condition checks corresponding to a case in which the first component is not faulty, and M is an integer greater than 0. It should be understood that in this embodiment of this application, when the first component is not faulty, the in-vehicle upgrade component needs to perform the M upgrade condition checks, and the first component can be installed/flashed only when results of all the M upgrade condition checks are successful/passed. Any upgrade condition check in the M upgrade condition checks, for example, a first upgrade condition check, is used as an example. That the first upgrade condition check succeeds may be understood as that a result of the first upgrade condition check is successful/passed.

During specific implementation, the in-vehicle upgrade component in the vehicle may obtain exception status information of the vehicle (or referred to as components in the vehicle), and determine a corresponding exception level based on the obtained exception status information. The first component is upgraded based on the second policy information when the exception level does not meet a preset condition. Table 1 is used as an example. It is assumed that the level threshold is Level 5. When an error of Level 5 or below (that is, Level 4 or below) occurs, the in-vehicle upgrade component may upgrade the first component based on the second policy information.

It should be understood that the N upgrade condition checks in this application may be included in the M upgrade condition checks, or the N upgrade condition checks may be different from the M upgrade condition checks, or some of the N upgrade condition checks are included in the M upgrade condition checks, and the other upgrade condition checks are different from the M upgrade condition checks. The M/N upgrade conditions may not be delivered by the server, but are preconfigured in the vehicle.

For example, the M upgrade condition checks in this application include one or more of the following: checking activation of a high-voltage signal, checking activation of a vehicle ignition signal (for example, a KL15 signal), checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, notifying the vehicle to enter an upgrade mode, or the like.

Generally, 0<N≤M. For example, the M upgrade condition checks are respectively checking activation of a high-voltage signal, checking activation of a vehicle ignition signal (for example, a KL15 signal), checking a traction battery power percentage of the vehicle, checking a speed of the vehicle, checking a gear of the vehicle (that is, M=5). The N upgrade condition checks are respectively checking activation of a high-voltage signal, checking activation of a vehicle ignition signal (for example, a KL15 signal), and checking a traction battery power percentage of the vehicle (that is, N=3). For another example, the M upgrade condition checks are respectively checking activation of a high-voltage signal, checking activation of a vehicle ignition signal (for example, a KL15 signal), checking a traction battery power percentage of the vehicle, checking a speed of the vehicle, checking a gear of the vehicle (that is, M=5). The N upgrade condition checks are respectively checking activation of a high-voltage signal, checking activation of a vehicle ignition signal (for example, a KL15 signal), checking a traction battery power percentage of the vehicle, checking a hand brake status of the vehicle, and checking a connection status of a fast charging connector of the vehicle (that is, N=5).

Optionally, in some feasible implementations, when the first policy information may further indicate to perform K upgrade condition checks in addition to indicating to ignore the results of the N upgrade condition checks or ignore the performance of the N upgrade condition checks, the K upgrade conditions may be included in the M upgrade conditions. In this case, N, K, and M may satisfy N+K=M. For example, the N (where N=12) upgrade condition checks may include checking activation of a high-voltage signal, checking activation of a vehicle ignition signal (for example, a KL15 signal), checking a traction battery power percentage of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, and notifying the vehicle to enter an upgrade mode. The K (where K=2) upgrade condition checks may include checking a speed of the vehicle and checking a gear of the vehicle. The M (where M=14) upgrade condition checks may include checking activation of a high-voltage signal, checking activation of a vehicle ignition signal (for example, a KL15 signal), checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, and notifying the vehicle to enter an upgrade mode.

In embodiments of this application, when the core component of the vehicle encounters an exception, a vehicle end actively identifies the exception status information, and generates the first policy information to rescue the core component. Such an automatic rescue manner without manual intervention can reduce operational costs, and help improve rescue efficiency and user experience.

The foregoing describes in detail the methods provided in embodiments of this application. The following provides an apparatus for implementing any one of the methods in embodiments of this application. For example, an apparatus including units (or means) for implementing steps performed by a device in any one of the foregoing methods is provided.

FIG. 6 is a diagram of a structure of an upgrade apparatus according to an embodiment of this application.

As shown in FIG. 6, the upgrade apparatus 60 may include a transceiver unit 601 and a processing unit 602. The transceiver unit 601 and the processing unit 602 may be software, hardware, or a combination of software and hardware.

The transceiver unit 601 may implement a sending function and/or a receiving function, and the transceiver unit 601 may also be described as a transceiver unit. The transceiver unit 601 may alternatively be a unit integrating an obtaining unit (or referred to as a receiving unit) and a sending unit. The obtaining unit is configured to implement a receiving function, and the sending unit is configured to implement a sending function. Optionally, the transceiver unit 601 may be configured to receive information sent by another apparatus, and may be further configured to send information to another apparatus.

In a possible design, the upgrade apparatus 60 may correspond to the in-vehicle device or the chip that is deployed with upgrade main control software in the method embodiment shown in FIG. 5. The upgrade apparatus 60 may include units configured to perform operations performed by the upgrade main control software in the method embodiment shown in FIG. 5. In addition, the units in the upgrade apparatus 60 are separately configured to implement the operations performed by the upgrade main control software in the method embodiment shown in FIG. 5. The units are described as follows.

The processing unit 602 is configured to upgrade a first component based on first policy information when the first component is faulty. The first policy information indicates to ignore results of N upgrade condition checks, or the first policy information indicates to ignore performance of the N upgrade condition checks. N is an integer greater than 0.

The processing unit 602 is configured to perform M upgrade condition checks based on second policy information when the first component is not faulty, where M is an integer greater than 0. The processing unit 602 is configured to upgrade the first component when the M upgrade condition checks succeed. That a first upgrade condition check succeeds includes that a result of the first upgrade condition check is successful, and the first upgrade condition check is any one of the M upgrade condition checks.

Optionally, the transceiver unit 601 is configured to receive the second policy information from a server when the first component is not faulty.

In a possible implementation, the first policy information is associated with the second policy information, the second policy information is from the server, and the first policy information is determined by a vehicle or preconfigured in the vehicle.

In a possible implementation, the processing unit 602 is further configured to:
obtain exception status information of the first component; and
determine a first exception level based on the exception status information, where the first exception level belongs to one of a plurality of exception levels, and the plurality of exception levels are used to describe fault severities.

When upgrading the first component based on the first policy information when the first component is faulty, the processing unit 602 is configured to:
upgrade the first component based on the first policy information when the first exception level meets a preset condition.

In a possible implementation, the plurality of exception levels are positively correlated with the fault severities.

That the first exception level meets the preset condition includes:
the first exception level is not lower than a level threshold.

In a possible implementation, the plurality of exception levels are negatively correlated with the fault severities.

That the first exception level meets the preset condition includes:
the first exception level is not higher than the level threshold.

In a possible implementation, the first component is a power-related component of the vehicle.

In a possible implementation, the power-related component includes one or more of the following:
a battery management system BMS, a micro controller unit MCU, or a power distribution unit PDU.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

In a possible implementation, upgrading the first component based on the first policy information includes:
upgrading the first component at a first moment based on the first policy information.

In a possible implementation, upgrading the first component at the first moment based on the first policy information includes:
upgrading the first component at the first moment based on the first policy information when a user is not in the vehicle.

In a possible implementation, before upgrading the first component at the first moment based on the first policy information, the processing unit 602 is further configured to:
release a first vehicle control signal, where the first vehicle control signal is a signal associated when the M upgrade condition checks are performed; and
activate a second vehicle control signal, where the second vehicle control signal is a signal associated with the first policy information.

In a possible implementation, the second vehicle control signal is included in the first vehicle control signal.

In a possible implementation, when upgrading the first component based on the first policy information, the processing unit 602 is configured to:
upgrade the first component based on the first policy information when a user is in the vehicle.

In a possible implementation, before upgrading the first component based on the first policy information, the processing unit 602 is configured to:
obtain a first user instruction; and
upgrade the first component based on the first policy information and the first user instruction.

For technical effects brought by this design and any possible implementation, refer to descriptions of technical effects corresponding to FIG. 5 and corresponding implementations.

In another possible design of the upgrade apparatus 60 shown in FIG. 6, the upgrade apparatus 60 may correspond to the server in the method embodiment shown in FIG. 5. For example, the upgrade apparatus 60 may be the server, or may be a chip in the server. The upgrade apparatus 60 may include units configured to perform operations performed by the server in the method embodiment shown in FIG. 5. In addition, the units in the upgrade apparatus 60 are separately configured to implement the operations performed by the server in the method embodiment shown in FIG. 5. The units are described as follows.

The processing unit 602 is configured to generate second policy information.

The transceiver unit 601 is configured to send the second policy information to a vehicle.

The vehicle includes a first component, the second policy information is associated with M upgrade condition checks, the M upgrade condition checks are upgrade condition checks corresponding to a case in which the first component is not faulty, the second policy information is associated with first policy information, the first policy information is upgrade policy information corresponding to a case in which the first component is faulty, the first policy information indicates to ignore results of N upgrade condition checks, or the first policy information indicates to ignore performance of the N upgrade condition checks, M is an integer greater than 0, and N is an integer greater than 0.

In a possible implementation, the first policy information is determined by the vehicle or preconfigured in the vehicle.

In a possible implementation, the first component is a power-related component of the vehicle.

In a possible implementation, the power-related component includes one or more of the following:
a battery management system BMS, a micro controller unit MCU, or a power distribution unit PDU.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

For technical effects brought by this design and any possible implementation, refer to descriptions of technical effects corresponding to FIG. 5 and corresponding implementations.

Optionally, in any possible design of the upgrade apparatus 60 shown in FIG. 6:

In an implementation, the upgrade apparatus is a communication device. When the upgrade apparatus is the communication device, the transceiver unit may be a transceiver or an input/output interface, and the processing unit may be at least one processor. Optionally, the transceiver may be a transceiver circuit. Optionally, the input/output interface may be an input/output circuit.

In another implementation, the upgrade apparatus is a chip (system) or a circuit used in a communication device. When the upgrade apparatus is the chip (system) or the circuit used in the communication device, the transceiver unit may be a communication interface (input/output interface), an interface circuit, an output circuit, an input circuit, a pin, a related circuit, or the like on the chip (system) or the circuit. The processing unit may be at least one processor, a processing circuit, a logic circuit, or the like.

According to this embodiment of this application, the units in the apparatus shown in FIG. 6 may be separately or all combined into one or more other units, or one (or more) of the units may be further divided into a plurality of smaller functional units. In this way, same operations can be implemented without affecting implementation of technical effects of embodiments of this application. The foregoing units are obtained through division based on logical functions. During actual application, a function of one unit may be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that, for implementations of the units, refer to corresponding descriptions of the method embodiment shown in FIG. 5.

In the upgrade apparatus 60 described in FIG. 6, when the core component of the vehicle encounters an exception, the upgrade apparatus 60 actively identifies the exception status information, and generates the first policy information to rescue the core component. Such an automatic rescue manner without manual intervention can reduce operational costs, and help improve rescue efficiency and user experience.

FIG. 7 is a diagram of a structure of an upgrade apparatus according to an embodiment of this application.

It should be understood that the upgrade apparatus 70 shown in FIG. 7 is merely an example. The upgrade apparatus in this embodiment of this application may further include other components, or include components with functions similar to those of components in FIG. 7, or does not necessarily need to include all components in FIG. 7.

The upgrade apparatus 70 includes a communication interface 701 and at least one processor 702.

The upgrade apparatus 70 may correspond to either device of an in-vehicle device or a server that is deployed with upgrade main control software. The communication interface 701 is configured to send and receive a signal, and the at least one processor 702 executes program instructions, to enable the upgrade apparatus 70 to implement a corresponding process of a method performed by a corresponding device in the foregoing method embodiments.

In a possible design, the upgrade apparatus 70 may correspond to the in-vehicle device or the chip that is deployed with the upgrade main control software in the method embodiment shown in FIG. 7. The upgrade apparatus 70 may include components configured to perform operations performed by the upgrade main control software in the foregoing method embodiments, and the components in the upgrade apparatus 70 are separately configured to implement the operations performed by the upgrade main control software in the foregoing method embodiments. Details may be as follows:
upgrading the first component based on first policy information when the first component is faulty, where the first policy information indicates to ignore results of N upgrade condition checks, or the first policy information indicates to ignore performance of the N upgrade condition checks, and N is an integer greater than 0; or
performing M upgrade condition checks based on second policy information when the first component is not faulty, where M is an integer greater than 0; and upgrading the first component when the M upgrade condition checks succeed. That a first upgrade condition check succeeds includes that a result of the first upgrade condition check is successful, and the first upgrade condition check is any one of the M upgrade condition checks.

In a possible implementation, the first policy information is associated with the second policy information, the second policy information is from the server, and the first policy information is determined by a vehicle or preconfigured in the vehicle.

In a possible implementation, the method further includes:
obtaining exception status information of the first component; and
determining a first exception level based on the exception status information, where the first exception level belongs to one of a plurality of exception levels, and the plurality of exception levels are used to describe fault severities.

Upgrading the first component based on the first policy information when the first component is faulty includes:
upgrading the first component based on the first policy information when the first exception level meets a preset condition.

In a possible implementation, the plurality of exception levels are positively correlated with the fault severities.

That the first exception level meets the preset condition includes:
the first exception level is not lower than a level threshold.

In a possible implementation, the plurality of exception levels are negatively correlated with the fault severities.

That the first exception level meets the preset condition includes:
the first exception level is not higher than the level threshold.

In a possible implementation, the first component is a power-related component of the vehicle.

In a possible implementation, the power-related component includes one or more of the following:
a battery management system BMS, a micro controller unit MCU, or a power distribution unit PDU.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

In a possible implementation, upgrading the first component based on the first policy information includes:
upgrading the first component at a first moment based on the first policy information.

In a possible implementation, upgrading the first component at the first moment based on the first policy information includes:
upgrading the first component at the first moment based on the first policy information when a user is not in the vehicle.

In a possible implementation, before upgrading the first component at the first moment based on the first policy information, the method further includes:
releasing a first vehicle control signal, where the first vehicle control signal is a signal associated when the M upgrade condition checks are performed; and
activating a second vehicle control signal, where the second vehicle control signal is a signal associated with the first policy information.

In a possible implementation, the second vehicle control signal is included in the first vehicle control signal.

In a possible implementation, upgrading the first component based on the first policy information includes:
upgrading the first component based on the first policy information when a user is in the vehicle.

In a possible implementation, before upgrading the first component based on the first policy information, the method further includes:
obtaining a first user instruction; and
upgrading the first component based on the first policy information and the first user instruction.

For technical effects brought by this design and any possible implementation, refer to descriptions of technical effects corresponding to FIG. 5 and corresponding implementations.

In another possible design, the upgrade apparatus 70 may correspond to the server in the method embodiment shown in FIG. 7. For example, the upgrade apparatus 70 may be the server, or may be a chip in the server. The upgrade apparatus 70 may include components configured to perform operations performed by the server in the foregoing method embodiments, and the components in the upgrade apparatus 70 are separately configured to implement the operations performed by the server in the foregoing method embodiments. Details may be as follows:
generating second policy information; and
sending the second policy information to a vehicle.

The vehicle includes a first component, the second policy information is associated with M upgrade condition checks, the M upgrade condition checks are upgrade condition checks corresponding to a case in which the first component is not faulty, the second policy information is associated with first policy information, the first policy information is upgrade policy information corresponding to a case in which the first component is faulty, the first policy information indicates to ignore results of N upgrade condition checks, or the first policy information indicates to ignore performance of the N upgrade condition checks, M is an integer greater than 0, and N is an integer greater than 0.

In a possible implementation, the first policy information is determined by the vehicle or preconfigured in the vehicle.

In a possible implementation, the first component is a power-related component of the vehicle.

In a possible implementation, the power-related component includes one or more of the following:
a battery management system BMS, a micro controller unit MCU, or a power distribution unit PDU.

In a possible implementation, the N upgrade condition checks include one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

For technical effects brought by this design and any possible implementation, refer to descriptions of technical effects corresponding to FIG. 5 and corresponding implementations.

In the upgrade apparatus 70 described in FIG. 7, when the core component of the vehicle encounters an exception, the upgrade apparatus 70 actively identifies the exception status information, and generates the first policy information to rescue the core component. Such an automatic rescue manner without manual intervention can reduce operational costs, and help improve rescue efficiency and user experience.

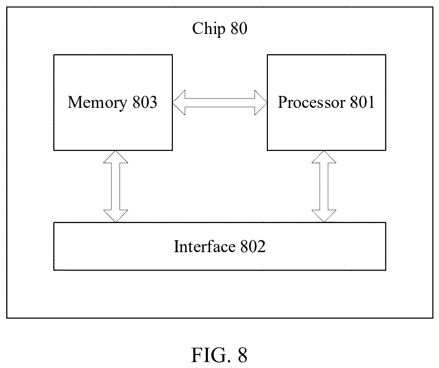

For a case in which the upgrade apparatus may be the chip or the chip system, refer to a diagram of a structure of a chip shown in FIG. 8.

As shown in FIG. 8, the chip 80 includes a processor 801 and an interface 802. There may be one or more processors 801, and there may be a plurality of interfaces 802. It should be noted that functions respectively corresponding to the processor 801 and the interface 802 may be implemented by using a hardware design, or may be implemented by using a software design, or may be implemented by using a combination of software and hardware. This is not limited herein.

Optionally, the chip 80 may further include a memory 803, and the memory 803 is configured to store necessary program instructions and data.

In this application, the processor 801 may be configured to: invoke, from the memory 803, a program for implementing, on one or more devices of the in-vehicle device or the server that is deployed with upgrade main control software, the upgrade method provided in one or more embodiments of this application, and execute instructions included in the program. The interface 802 may be configured to output an execution result of the processor 801. In this application, the interface 802 may be specifically configured to output each message or information of the processor 801.

For the upgrade method provided in one or more embodiments of this application, refer to the foregoing embodiment shown in FIG. 5. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the method shown in FIG. 5 may be implemented.

According to the method provided in embodiments of this application, an embodiment of this application further provides a computer program product. The computer program product includes a computer program. When the computer program is run on a processor, the method shown in FIG. 5 may be implemented.

An embodiment of this application further provides a system. The system includes at least one upgrade apparatus 60, upgrade apparatus 70, or chip 80, configured to perform steps performed by a corresponding device in any embodiment in FIG. 5.

An embodiment of this application further provides a system. The system includes an in-vehicle device and a server that is deployed with upgrade main control software. The in-vehicle device deployed with the upgrade main control software is configured to perform steps performed by the upgrade main control software in the embodiment shown in FIG. 5. The server is configured to perform steps performed by the server in the embodiment shown in FIG. 5.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component, may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), or may be a programmable logic device (programmable logic device, PLD) or another integrated chip. Various methods, steps, and logical block diagrams disclosed in embodiments of this application may be implemented or executed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The units in the foregoing apparatus embodiments completely correspond to the electronic devices in the method embodiments, and a corresponding module or unit performs a corresponding step. For example, a transceiver unit (a transceiver) performs a receiving or sending step in the method embodiments, and a step other than the sending step and the receiving step may be performed by a processing unit (a processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the contributing part, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An upgrade method, applied to a vehicle, wherein the vehicle comprises a first component, and the method comprises:
upgrading the first component based on first policy information when the first component is faulty, wherein the first policy information indicates to ignore results of N upgrade condition checks, or the first policy information indicates to ignore performance of the N upgrade condition checks, and N is an integer greater than 0; or
performing M upgrade condition checks based on second policy information when the first component is not faulty, wherein M is an integer greater than 0; and upgrading the first component when the M upgrade condition checks succeed, wherein that a first upgrade condition check succeeds comprises that a result of the first upgrade condition check is successful, and the first upgrade condition check is any one of the M upgrade condition checks.

2. The method according to claim 1, wherein the first policy information is associated with the second policy information, the second policy information is from a server, and the first policy information is determined by the vehicle or preconfigured in the vehicle.

3. The method according to claim 1 or 2, wherein the method further comprises:
obtaining exception status information of the first component; and
determining a first exception level based on the exception status information, wherein the first exception level belongs to one of a plurality of exception levels, and the plurality of exception levels are used to describe fault severities; and
upgrading the first component based on the first policy information when the first component is faulty comprises:
upgrading the first component based on the first policy information when the first exception level meets a preset condition.

4. The method according to any one of claims 1 to 3, wherein the first component is a power-related component of the vehicle.

5. The method according to claim 4, wherein the power-related component comprises one or more of the following:
a battery management system BMS, a micro controller unit MCU, or a power distribution unit PDU.

6. The method according to any one of claims 1 to 5, wherein the N upgrade condition checks comprise one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

7. The method according to any one of claims 1 to 6, wherein upgrading the first component based on the first policy information comprises:
upgrading the first component at a first moment based on the first policy information.

8. The method according to claim 7, wherein upgrading the first component at the first moment based on the first policy information comprises:
upgrading the first component at the first moment based on the first policy information when a user is not in the vehicle.

9. The method according to claim 7 or 8, wherein before upgrading the first component at the first moment based on the first policy information, the method further comprises:
releasing a first vehicle control signal, wherein the first vehicle control signal is a signal associated when the M upgrade condition checks are performed; and
activating a second vehicle control signal, wherein the second vehicle control signal is a signal associated with the first policy information.

10. The method according to claim 9, wherein the second vehicle control signal is comprised in the first vehicle control signal.

11. The method according to any one of claims 1 to 6, wherein upgrading the first component based on the first policy information comprises:
upgrading the first component based on the first policy information when a user is in the vehicle.

12. The method according to any one of claims 1 to 11, wherein before upgrading the first component based on the first policy information, the method further comprises:
obtaining a first user instruction; and
upgrading the first component based on the first policy information and the first user instruction.

13. An upgrade method, applied to a server, wherein the method comprises:
generating second policy information; and
sending the second policy information to a vehicle, wherein
the vehicle comprises a first component, the second policy information is associated with M upgrade condition checks, the M upgrade condition checks are upgrade condition checks corresponding to a case in which the first component is not faulty, the second policy information is associated with first policy information, the first policy information is upgrade policy information corresponding to a case in which the first component is faulty, the first policy information indicates to ignore results of the N upgrade condition checks, or the first policy information indicates to ignore performance of the N upgrade condition checks, M is an integer greater than 0, and N is an integer greater than 0.

14. The method according to claim 13, wherein the first policy information is determined by the vehicle or preconfigured in the vehicle.

15. The method according to claim 13 or 14, wherein the first component is a power-related component of the vehicle.

16. The method according to claim 15, wherein the power-related component comprises one or more of the following:
a battery management system BMS, a micro controller unit MCU, or a power distribution unit PDU.

17. The method according to any one of claims 13 to 16, wherein the N upgrade condition checks comprise one or more of the following:
checking activation of a high-voltage signal, checking activation of a vehicle ignition signal, checking a traction battery power percentage of the vehicle, checking a speed of the vehicle, checking a gear of the vehicle, checking an ignition status of the vehicle, checking a status of an on-board diagnostics interface of the vehicle, checking whether the vehicle allows vehicle upgrade or vehicle flashing, checking a hand brake status of the vehicle, checking a connection status of a fast charging connector of the vehicle, checking a connection status of a charging connector of the vehicle, checking a fuel filler lid status of the vehicle, checking a battery power percentage of the vehicle, or notifying the vehicle to enter an upgrade mode.

18. An upgrade apparatus, comprising a unit or a module configured to perform the method according to any one of claims 1 to 12.

19. An upgrade apparatus, comprising a unit or a module configured to perform the method according to any one of claims 13 to 17.

20. An upgrade apparatus, comprising a processor, wherein when the processor invokes a computer program or instructions in a memory, the method according to any one of claims 1 to 12 is performed.

21. An upgrade apparatus, comprising a processor, wherein when the processor invokes a computer program or instructions in a memory, the method according to any one of claims 13 to 17 is performed.

22. An upgrade apparatus, comprising a logic circuit and an interface, wherein the logic circuit is coupled to the interface; and
the interface is configured to input to-be-processed data, the logic circuit processes the to-be-processed data according to the method according to any one of claims 1 to 12, to obtain processed data, and the interface is configured to output the processed data.

23. An upgrade apparatus, comprising a logic circuit and an interface, wherein the logic circuit is coupled to the interface; and
the interface is configured to input to-be-processed data, the logic circuit processes the to-be-processed data according to the method according to any one of claims 13 to 17, to obtain processed data, and the interface is configured to output the processed data.

24. A computer-readable storage medium, wherein
the computer-readable storage medium is configured to store instructions or a computer program; and when the instructions or the computer program is executed, the method according to any one of claims 1 to 12 is implemented.

25. A computer-readable storage medium, wherein
the computer-readable storage medium is configured to store instructions or a computer program; and when the instructions or the computer program is executed, the method according to any one of claims 13 to 17 is implemented.

26. A computer program product, comprising instructions or a computer program, wherein
when the instructions or the computer program is executed, the method according to any one of claims 1 to 12 is performed.

27. A computer program product, comprising instructions or a computer program, wherein
when the instructions or the computer program is executed, the method according to any one of claims 13 to 17 is performed.

28. A vehicle, comprising the upgrade apparatus according to claim 18, the upgrade apparatus according to claim 20, or the upgrade apparatus according to claim 22.

29. A system, comprising a vehicle and a server, wherein
the vehicle is configured to perform the method according to any one of claims 1 to 18, and the server is configured to perform the method according to any one of claims 13 to 17.
